# EUROPEAN PATENT APPLICATION

(11) **EP 4 470 687 A1**
(43) Date of publication of application: **04.12.2024**
(21) Application number: 23738413.6
(22) Date of filing: 13.04.2023
(51) Int. Cl.: B09B 3/35, B02C 18/00, B02C 23/00, B01D 35/02, B01D 29/78

(54) **SCRAP CRUSHING AND CONVEYING DEVICE**

(71) Applicant: Young Chang Eco Co., Ltd., Sasang-gu, Busan 47030 (KR)
(72) Inventor: CHO, Gae Young, Busan 49497 (KR)
(74) Representative: Gulde & Partner
(86) International application number: PCT/KR2023/005044
(87) International publication number: WO 2024/214846

(57) **Abstract**

Disclosed is a scrap crushing and carrying apparatus, including: a coarse crusher for crushing scraps; a fine crusher for further crushing the scraps crushed by the coarse crusher; and a carrier for storing the scraps or carrying the scraps to the coarse crusher or the fine crusher, wherein the carrier includes a filter unit provided inside the carrier to collect dust in the carrier.

The present invention realizes a new type crushing apparatus to crush, package, and commercialize scraps, waste shoes, or waste tires generated when shoe soles are manufactured through a preliminary crushing process of first crushing them roughly and a fine crushing process of second crushing them minutely, thereby solving the environmental pollution problem, and promoting economic benefits through resource recycling.

## Description

### Technical Field

The present invention relates to a scrap crushing and carrying apparatus, and more particularly, to a scrap crushing and carrying apparatus that crushes and carries scraps of rubber materials remaining after making shoe insoles and rubber materials such as waste shoes so that they can be recycled.

### Background Art

In general, a shoe sole serves to protect the sole of the foot, improve walking performance by increasing friction with the ground, and mitigate the impact applied to the sole of the foot during walking. These shoe soles include an insole, a midsole made of rubber, foamed resin, or sponge material with excellent buffering power to elastically distribute and support the load of the human body during walking, and an outsole attached to the bottom surface of the midsole and made of rubber material to provide frictional force during walking. For example, Korean Patent No. 10-1760577 (July 17, 2017) discloses a method for manufacturing an insole for shoe.

On the other hand, a process of manufacturing shoes will be described. A textile fabric is layered on the upper surface of a substantially rectangular flat-type foamed body to form a plate-type laminated body, and then, a sole-shaped laminated body for an insole is cut, processed, and separated from the plate-type laminated body. When the laminated body for an insole is separated from the plate-type laminated body, insole scraps having sole-shaped openings remain. A very great deal of insole scraps are generated during the process of manufacturing insoles. Even though the very great deal of insole scraps are generated, it is a current reality that the insole scraps are simply disposed of, so it causes waste of resources and environmental destruction. Moreover, dust generated during the crushing process is accumulated, and it causes the breakdown of the crushing and carrying apparatus.

### Disclosure

### Technical Problem

Accordingly, the present invention has been made in view of the above-mentioned problems occurring in the related art, and it is an object of the present invention to provide a scrap crushing and carrying apparatus that crushes and carries scraps of rubber materials remaining after making shoe insoles and rubber materials such as waste shoes so that they can be recycled, and collects dust generated during a crushing process to minimize a damage to the crushing device or carrying apparatus.

The aspects of the present disclosure are not limited to those mentioned above, and other aspects not mentioned herein will be clearly understood by those skilled in the art from the following description.

### Technical Solution

To accomplish the above-mentioned objects, according to the present invention, there is provided a scrap crushing and carrying apparatus including: a coarse crusher for crushing scraps; a fine crusher for further crushing the scraps crushed by the coarse crusher; and a carrier for storing the scraps or carrying the scraps to the coarse crusher or the fine crusher, wherein the carrier includes a filter unit provided inside the carrier to collect dust in the carrier.

Moreover, the scrap crushing and carrying apparatus according to an embodiment of the present invention includes: a chamber that forms a space where the scraps can be stored; a pump unit provided on one side of the chamber to vary the pressure inside the chamber; and an inlet that communicates with the chamber to allow the scraps to be carried into the chamber, wherein the scraps are sucked into the chamber through the inlet since negative pressure is formed inside the chamber by the pump unit.

Furthermore, according to an embodiment of the present invention, the carrier further includes: an outlet that communicates with the chamber and allows the carried scraps inside the chamber to be discharged to the outside; and a damper that opens or closes the outlet, wherein the outlet is closed by the damper when the scraps are sucked, and is opened by the damper when the scraps are discharged.

Additionally, according to an embodiment of the present invention, the pump unit sprays air to clean the filter unit in a state in which the outlet is opened by the damper when the scraps are discharged.

In addition, according to an embodiment of the present invention, the carrier further includes a vent hole for allowing at least some of the air sprayed from the pump unit to flow to the outside when the scraps are discharged, wherein the vent hole includes a vent filter for filtering the air flowing to the outside.

### Advantageous Effects

According to the present invention, the scrap crushing and carrying apparatus of the present invention, as a means of solving the above-mentioned task, is designed to crush and convey rubber scraps, such as shoe insoles, and rubber scraps from waste shoes, using a scrap crushing and carrying apparatus, so that the remaining rubber material can be recycled. The device also includes a dust collection system to prevent damage to the crushing or carrying apparatus caused by accumulated dust during the crushing process, thereby providing an effective scrap crushing and carrying apparatus.

Furthermore, the scrap crushing and carrying apparatus according to the present invention is a new crushing apparatus that automates the entire process, including feeding of scraps, primary crushing, carrying, secondary crushing, and packaging, by linking a first coarse crusher and a second fine crusher, thereby solving the problem of environmental pollution, obtaining economic benefits through resource recycling, improve productivity, and increasing efficiency in operation of the apparatus.

In addition, the scrap crushing and carrying apparatus according to the present invention is advantageous in terms of factory layout capable of compactly constructing the overall devices and in terms of economic feasibility related to the device construction, since the coarse crusher for a first preliminary crushing process and the fine crusher for a second fine crushing process are arranged successively to link the preliminary crushing process and the fine crushing process.

The effects of the present invention are not limited to the above-mentioned effects and further effects not described above will be clearly understood by those skilled in the art.

### Description of Drawings

FIG. 1 is a perspective diagram illustrating the configuration of a carrier of a scrap crushing and carrying apparatus according to an embodiment of the present invention.
FIG. 2 is a perspective view illustrating a coarse crusher of the scrap crushing and carrying apparatus according to an embodiment of the present invention.
FIGS. 3 to 5 are front, plan, and side views, respectively, illustrating the coarse crusher of the scrap crushing and carrying apparatus according to an embodiment of the present invention.
FIG. 6 is an enlarged view illustrating the coarse crusher of the scrap crushing and carrying apparatus according to an embodiment of the present invention.
FIG. 7 is a perspective view illustrating a fine crusher of the scrap crushing and carrying apparatus according to an embodiment of the present invention.
FIGS. 8 to 10 are front, plan, and side views, respectively, illustrating the fine crusher of the scrap crushing and carrying apparatus according to an embodiment of the present invention.
FIGS. 11 to 13 are enlarged views illustrating the fine crusher of the scrap crushing and carrying apparatus according to an embodiment of the present invention.
FIGS. 14 to 17 are sectional views illustrating cooling devices of a secondary fine crusher and a tertiary fine crusher in the fine crusher of the scrap crushing and carrying apparatus according to an embodiment of the present invention, wherein FIG. 15(a) is a sectional view illustrating a coupling structure of a cutter holder and a shaft, and FIG. 15(b) illustrates the shape of a blade.

### Mode for Invention

The terminology used in this specification will be briefly explained, and the present invention will be described in detail.

The terminology used in the present invention has been selected from commonly used general terms considering the functions of the present invention, but it may vary depending on the intentions of those skilled in the art, precedents, or the emergence of new technology in the field. Therefore, the terminology used in the present invention should be defined based not only on the names of simple terms, but also on the meanings they have and the overall content of the present invention.

When a part in the entire specification is referred to as "including" a certain component, unless there is a specific contrary statement, it means that it may include other components in addition to the certain component.

Hereinafter, the embodiments of the present invention will be described in detail with reference to the attached drawings, so that those skilled in the art with ordinary knowledge in the technical field to which the present invention belongs can easily carry out the present invention. However, the present invention can be implemented in various different forms, and is not limited to the embodiments described herein.

Specific matters related to the objects to be solved by the present invention, means for solving the objects, and effects of the invention are included in the embodiments and drawings to be described later. Advantages and features of the present invention, and method to achieve them of the present invention will be obvious with reference to embodiments along with the accompanying drawings which are described below.

Hereinafter, the present invention will be described in more detail with reference to the attached drawings.

A scrap crushing and carrying apparatus according to an embodiment of the present invention includes: a coarse crusher 10 for crushing scraps; a fine crusher 11 for further crushing the scraps crushed by the coarse crusher 10; and a carrier 100 for storing the scraps or carrying the scraps to the coarse crusher 10 or the fine crusher 11.

First, the carrier 100 is prepared. The carrier 100 serves to suck and store the scraps crushed by the coarse crusher 10 or the fine crusher 11 via a pipe 34, which will be described later, and discharge the stored scraps when necessary.

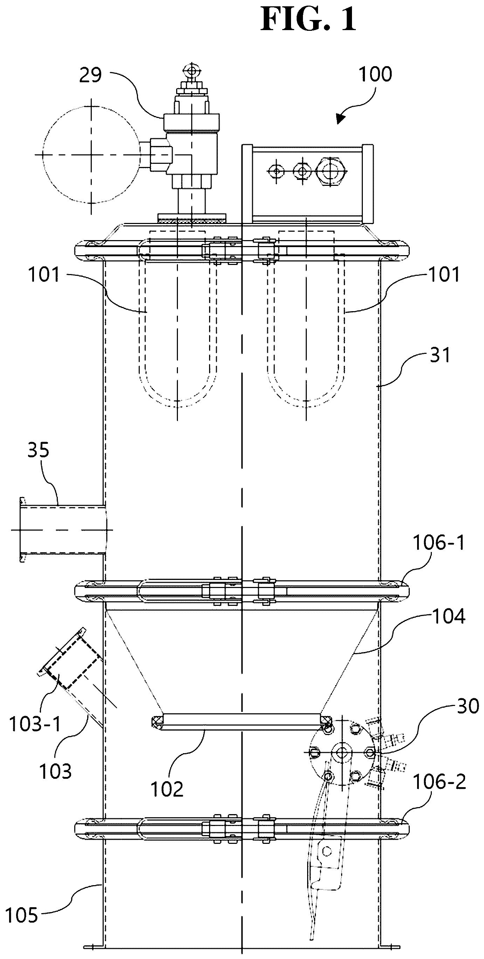

Referring to FIG. 1, the carrier 100 includes a chamber 31 that forms a space where the scraps can be stored, a pump unit 29 provided on one side of the chamber 31 to vary the pressure inside the chamber 31, and an inlet 35 that communicates with the chamber 31 to allow the scrap to be carried into the chamber 31.

Specifically, the chamber 31 has a cylindrical shape and forms a space therein for storing the scraps. In this case, the inlet 35 is provided in the side of the chamber 31 to be connected to the coarse crusher 10 or the fine crusher 11 via the pipe. That is, the scraps crushed by the coarse crusher 10 or the fine crusher 11 can be introduced into the chamber 31 through the inlet 35.

In addition, the pump unit 29 that is installed in communication with the inside of the chamber 31 is provided on an upper portion of the chamber 31. The pump unit 29 varies the pressure inside the chamber 31 by discharging the air inside the chamber 31 to the outside or supplying external air into the chamber 31. That is, when the scraps are carried into the chamber 31, the pump unit 29 forms a negative pressure throughout the interior of the chamber 31 or momentarily discharges high-pressure air to the outside through the interior of the chamber 31, so that the scraps are sucked into the chamber 31 through the inlet 35 connected to the pipe by forming the negative pressure on the inner top of the chamber 31.

For example, a compressed air exhaust port may be provided at a point symmetrical to the pump unit 29 of the upper portion of the chamber 31. That is, as illustrated in FIG. 1, the pump unit 29 is installed at the left top of the chamber 31, and the compressed air exhaust port is formed at the right top of the chamber 31 and may be opened or closed by a separate valve. Accordingly, when suction of scraps is required, the pump unit 29 sprays compressed air so that the compressed air momentarily passes through the inside of the chamber 31 and is discharged to the outside through the exhaust port. In other words, the scraps can be sucked into the chamber 31 through the inlet 35 by an instantaneous change in pressure as compressed air is rapidly discharged to the outside after passing through the interior of the chamber 31 by the Bernoulli's principle. Additionally, in a case in which the inlet 35 or the pipe is clogged by the scraps, the pump unit 29 may spray compressed air at a high speed to be discharge to the outside after passing the interior of the chamber 31, thereby allowing the scraps to be carried. For example, the pump unit 29 may include a first pump that discharges the air inside the chamber 31 to the outside, and a second pump that supplies compressed air discharged to the outside through the interior of the chamber 31 in the opposite direction to the first pump.

Next, the carrier 100 further includes an outlet 102 that communicates with the chamber 31 and allows the carried scraps inside the chamber 31 to be discharged to the outside, and a damper 30 that opens or closes the outlet 102.

Specifically, the carrier 100 further includes a tapered housing 104 whose cross-sectional area decreases as it directs downward, and the housing 104 is coupled to the bottom of the chamber 31. At this time, the outlet 102 is provided at the bottom of the housing 104. In addition, the outlet 102 is opened or closed by the damper 30, for example, the damper 30 opens or closes the outlet 102 by using an actuator such as a cylinder. Here, the damper 30 may refer to a manual or automatic air volume control device installed inside the pipe to control the direction, speed, and amount of air.

Furthermore, the carrier 100 further includes a communication portion 105 formed to have the same diameter as the chamber 31 and surrounding the housing 104 under the chamber 31. The communication portion 105 is in communication with a space or device for supplying scraps when the scraps are discharged downward in the chamber 31. For example, an upper portion of the communication portion 105 is in communication with the chamber 31, and a lower portion of the communication portion 105 is in communication with the fine crusher 11. The communication portion 105 has a cylindrical tube shape, and may be coupled to the chamber 31 by a coupling portion 106-1, and a plurality of communication portions 105 may be coupled to each other by a plurality of coupling portions 106-2 to be lengthened.

As a result, in a case in which the scraps are sucked into the interior of the chamber 31 by the pump unit 29, in a state in which the outlet 102 is closed by the damper 30, a negative pressure is formed inside the chamber 31 by the damper 30, and the outlet 102 is opened by the damper 30 when the scraps are discharged so that the scraps are discharged downward through the outlet 102. Here, the discharged scraps are carried along the communication portion 105.

Next, the carrier 100 further includes a filter unit 101 provided inside the carrier 100 for collecting dust inside the carrier 100. The filter unit 101 is, for example, an electric dust collecting filter for electrostatically collecting fine scrap particles or dust generated from the scraps carried into the chamber 31 to prevent the scrap particles or dust from accumulating in the pump unit 29 or valves and degrading the performance of the pump unit 29. For example, plural filter units 101 may be respectively provided at the lower portion of the pump unit 29, i.e., the left top of the chamber 31 and the right top of the chamber 31 corresponding to the left top. Therefore, the plurality of filter units 101 serves to prevent dust from accumulating in the pump unit 29 and the exhaust port.

Moreover, in a case in which the scraps are discharged, in the state in which the outlet 102 is opened by the damper 30, the pump unit 29 injects air downward into the chamber 31 to clean the filter unit 101. In other words, after the scraps are discharged downward through the outlet 102 in the state in which the outlet 102 is opened, the pump unit 29 sprays air toward the filter unit 101 to remove the scrap dust collected in the filter unit 101. Thus, the scrap dust removed from the filter unit 101 is discharged downward through the outlet 102.

Furthermore, the carrier 100 further includes a vent hole 103 that allows at least some of the air injected from the pump unit 29 to flow to the outside when the scrap is discharged. The vent hole 103 is provided with a vent filter 103-1 that is formed to cover the inside of the vent hole 103 to filter the air flowing to the outside. In this case, one side of the vent hole 103 is formed to communicate with the inside of the communication part 105 in one side of the vent hole 103, and the other side of the vent hole 103 communicates with the outside. Therefore, the vent hole 103 serves to prevent pressure inside the chamber 31 and the communication part 105 from increasing due to the air injected from the pump unit 29. During this process, the scrap dust in the air flowing to the outside through the vent hole 103 is filtered by the vent filter 103-1.

As a result, the pump unit 29 carries the crushed scraps into the chamber 31, and injects air to the filter unit 101 when the scraps stored in the chamber 31 are discharged downward so that the agglomerated scrap particles are discharged downward by the filter unit 101. The vent hole 103 is provided to prevent pressure from increasing due to the air injected from the pump unit 29 when the filter unit 101 is cleaned, and the dust in the air discharged to the outside through the vent hole 103 is filtered by the vent filter 103-1.

Meanwhile, the carrier 100 may be applied as a first carrying part 19, a second carrying part 22, a third carrying part 25, and a fourth carrying part 28.

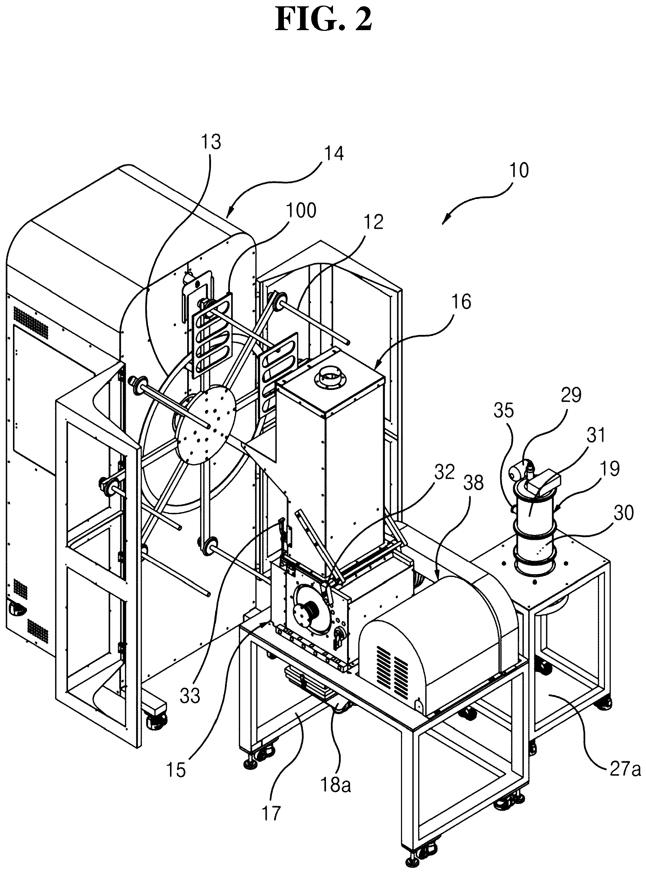

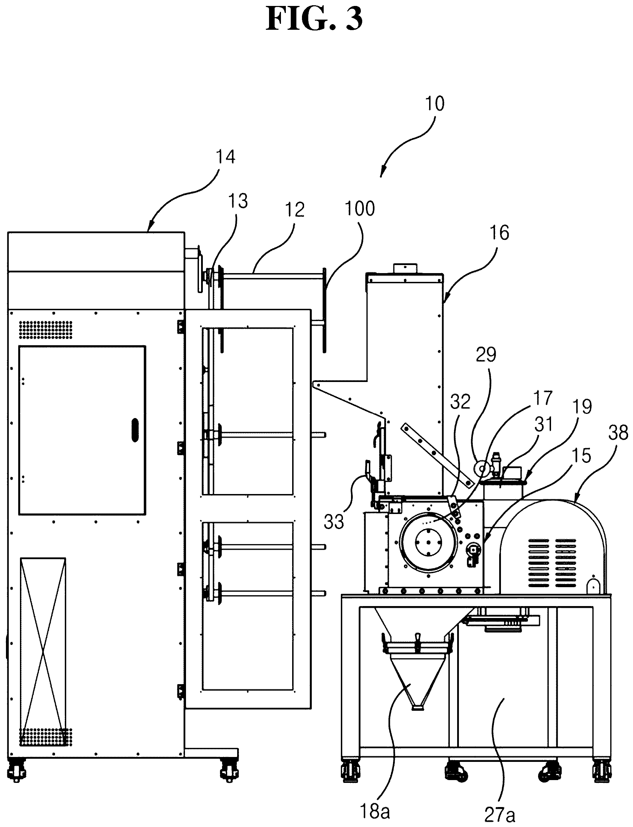

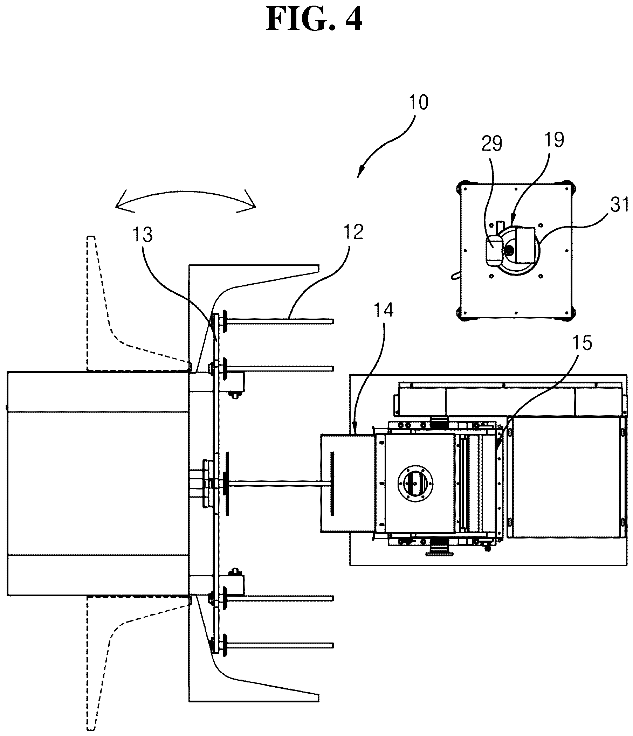

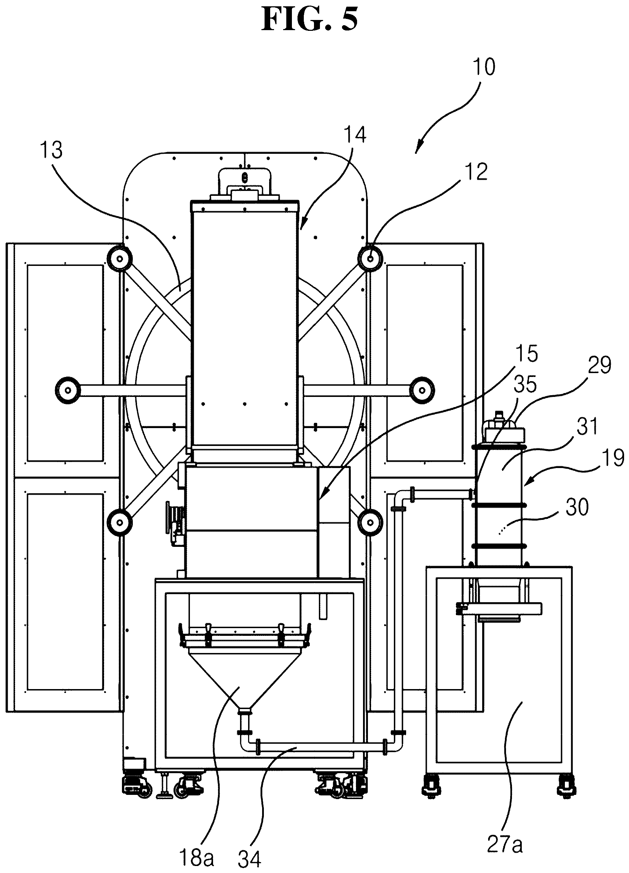

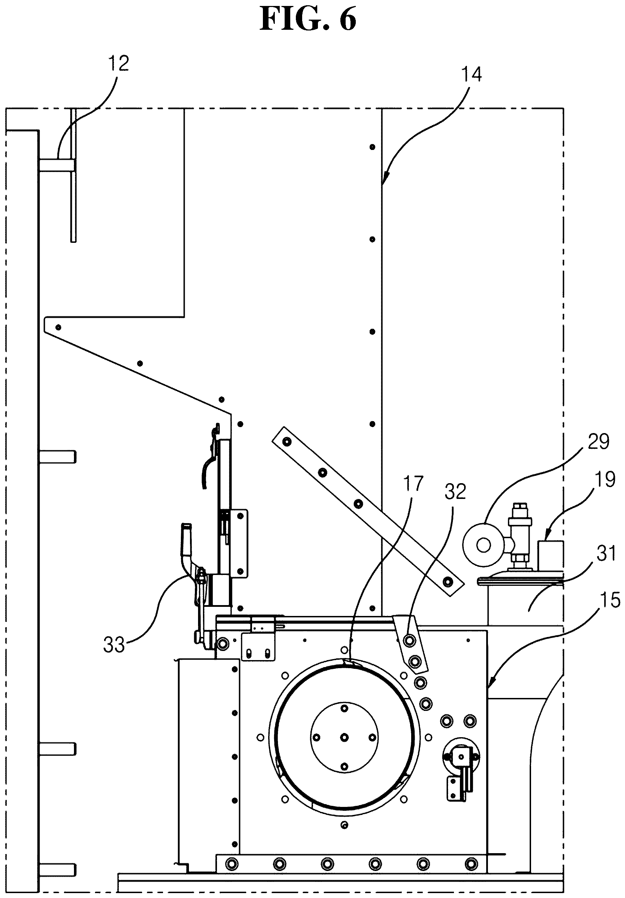

Hereinafter, a multistage scrap crushing and carrying apparatus to which the plurality of carriers 100 are applied will be described in detail with reference to the attached drawings. FIG. 2 is a perspective view illustrating a coarse crusher of the scrap crushing and carrying apparatus according to an embodiment of the present invention, FIGS. 3 to 5 are front, plan, and side views, respectively, illustrating the coarse crusher of the scrap crushing and carrying apparatus according to an embodiment of the present invention, and FIG. 6 is an enlarged view illustrating the coarse crusher of the scrap crushing and carrying apparatus according to an embodiment of the present invention.

As illustrated in FIGS. 2 to 6, the coarse crusher 10 is a device that roughly crushes scraps 100 such as rubber material. More specifically, the coarse crusher 10 includes: a preliminary crushing feeding part 14 having a plurality of hangers 12 on which the scraps can be hung, and a rotatable table 13; a preliminary crushing hopper part arranged in front of the preliminary crushing feeding part 14 to put the scraps dropping from the hangers 12 into a first preliminary crushing part 15; the first preliminary crushing part 15 for crushing the scraps fed from the preliminary crushing hopper part 16 by using a first preliminary crushing cutter 17 arranged below the preliminary crushing hopper part 16 to be able to rotate; and a first carrying part 19 arranged at one side of the first preliminary crushing part 15 and connected between a discharge hopper 18a and a packing part 27a of the first preliminary crushing part 15 to carry scrap particles discharged from the first preliminary crushing part 15 to the packing part 27a. Moreover, the plurality of hangers 12 of the preliminary crushing feeding part 14 are arranged at uniform pitches along the edge of the table 13 and has a length extending to an inlet of the preliminary crushing hopper part 16, so that the scraps can be fed at the point of time when the hangers 12 are located at an upper portion of the inlet of the preliminary crushing hopper part 16 by the rotatable table 13.

The preliminary crushing feeding part 14 functions as means for aligning and arranging scraps before the scraps are fed, and includes the rotatable circular table 13 that is provided vertically and can be driven by a driving unit (not shown) such as a motor. The plurality of hangers 12 for hanging scraps are installed on the front of the table 13.

Here, each of the hangers 12 is formed in a straight bar shape, and the plurality of hangers 12 are arranged at uniform pitches along the edge of the table 13. For instance, eight hangers are arranged at an angle of about 45 degrees in the circumferential direction of the table. One end of each hanger 13 is fixed on the table 13 while the other end extends horizontally just above the inlet of the preliminary crushing hopper part 16.

Accordingly, when the plurality of scraps hanging on the hangers 13 are automatically or manually pushed forward to get out in a state in which one of the hangers 13 is positioned above the inlet of the preliminary crushing hopper part 16 by the rotation of the table 13, the scraps can be introduced into the preliminary crushing hopper part 16 after falling into the inlet of the preliminary crushing hopper part 16.

The preliminary crushing hopper part 16 has a box-shaped structure having an inlet formed at the back so that scraps are fed and an outlet formed at the bottom to discharge the scraps to the preliminary crushing part 15, is arranged in front of the preliminary crushing feeding part 14, and serves to supply the scraps dropping from the hangers 12 into the first preliminary crushing part 15.

The preliminary crushing hopper part 16 is installed to be put and supported on the top of the first preliminary crushing part 15, namely, on the upper end to which the scraps are introduced, through the lower end.

For this purpose, the lower front part of the preliminary crushing hopper part 16 is supported by a hinge device 32 on the front upper portion of the primary crushing unit 15 in a rotatable structure, and the front lower portion of the preliminary crushing hopper part 16 is supported on the rear upper end of the first preliminary crushing part 15 in an openable structure by a toggle clamp 33.

The lower end of the preliminary crushing hopper part 16 communicates with the upper end of the first preliminary crushing part 15 thus installed is fluidly connected to the upper part of the primary crushing unit 15 in a closely fitting form, so that the scraps entering the interior of the preliminary crushing hopper part 16 can be sent directly into the interior of the preliminary crushing hopper part 16.

In addition, when the toggle clamp 31 is operated to unlock, the preliminary crushing hopper part 16 can recline forward. Accordingly, since the upper end of the first preliminary crushing part 15 can be exposed to the outside, it can be effectively managed even though devices for maintaining, inspecting, and cleaning the inside of the first preliminary crushing part 15 are not disassembled or dismantled.

The first preliminary crushing part 15 is a means for crushing scraps, and is installed in front of the preliminary crushing feeding part 14 and below the preliminary crushing hopper part 16 while being supported by a frame structure.

The first preliminary crushing part 15 includes a first preliminary crushing cutter 17, which is rotated by a driving unit 38 such as a motor driving means, a belt driving means, or the like.

Accordingly, when the scraps are fed from the preliminary crushing hopper part 16 of the first preliminary crushing part 15 to the first preliminary crushing part 15 below the preliminary crushing hopper part 16 during the operation of the first preliminary crushing part 15, the scraps are cut and pulverized into small pieces by the first preliminary crushing cutter 17 which is rotating. The crushed scrap particles are sent to the first carrying part 19 to be packed in the packing part 27a after passing the discharge hopper 18a located at the lower end of the first preliminary crushing part 15.

The first carrying part 19 serves to carry the scrap particles after the crushing process in the first preliminary crushing part 15 to the packing part 27a by using vacuum pressure or suction pressure.

For this purpose, the first carrying part 19 is installed on one side of the first preliminary crushing part 15, and the suction side of the first carrying part 19 is connected to the discharge hopper 18a of the first preliminary crushing part 15 via the pipe 34, and the discharge side is arranged above and below the packing part 27a, such as a packing part 27a having a sack (not shown) for holding the scrap particles.

The first carrying part 19 includes a pump unit 29, and the suction force exerted by the pump unit 29 allows the scrap particles to be sucked and carried.

Here, the pump unit 29 is installed to be supported on the top of the chamber 31. In this instance, the suction side of the pump unit 29 is connected to the interior of the chamber 31, and a mesh screen is interposed between the suction side and the interior of the chamber to prevent the scrap particles from being introduced into the pump.

In addition, the first carrying part 19 includes the chamber 31 that can collect a certain amount of scrap particles carried by suction.

A scrap particle inlet 35 is formed on the side of the chamber 21, and a pipe 34 extending from the discharge hopper 18a of the first preliminary crushing unit 15 can be connected to the scrap particle inlet 35.

Furthermore, the first carrying part 19 includes a damper 30 capable of opening and closing, which can be installed on a discharge side of the bottom of the chamber 31.

Here, it is preferable that the damper 30 is opened and closed using the operation of an actuator such as a cylinder.

Accordingly, when the pump unit 29 is operated in a state in which the damper 30 is closed, the scrap particles in the discharge hopper 18a of the first preliminary crushing unit 15 are carried through the pipe 34 and collected inside the chamber 31 through the scrap particle inlet 35. The collected scrap particles can drop down and be contained in a sack of the packaging part 27a when the damper is opened.

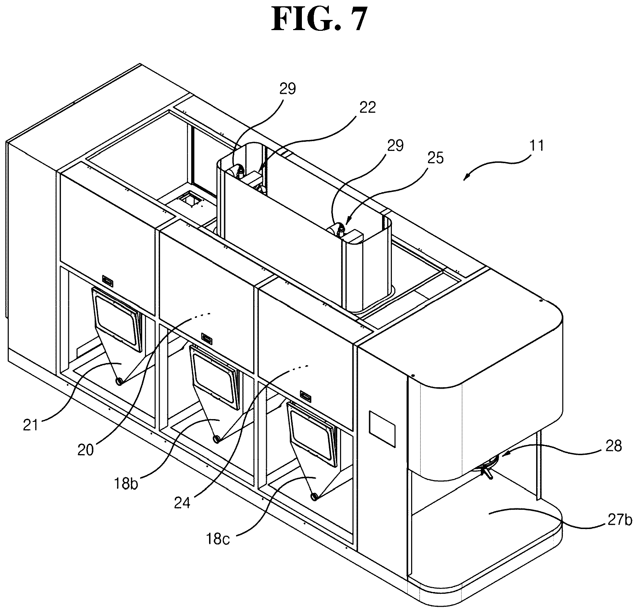

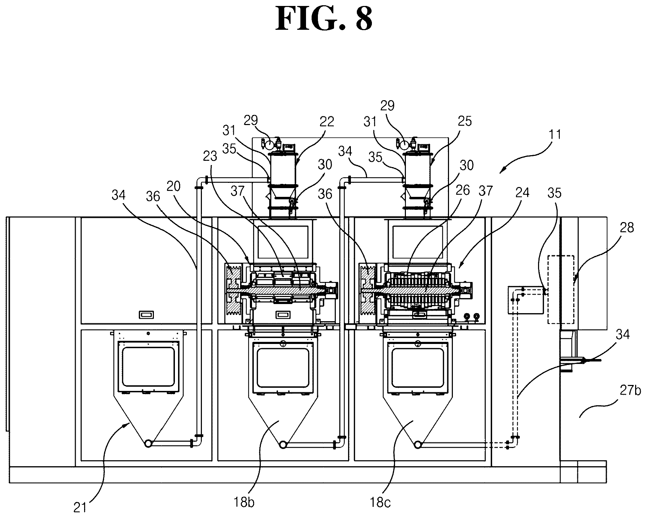

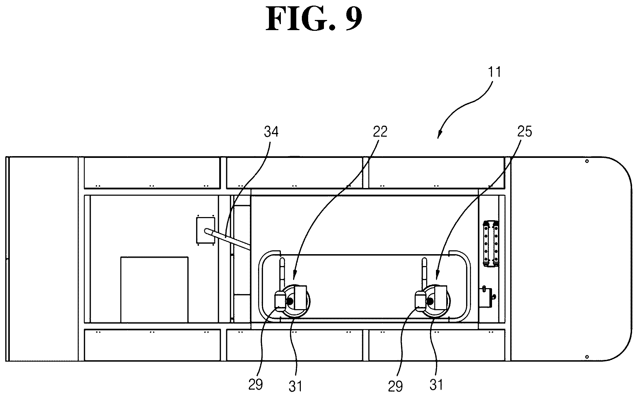

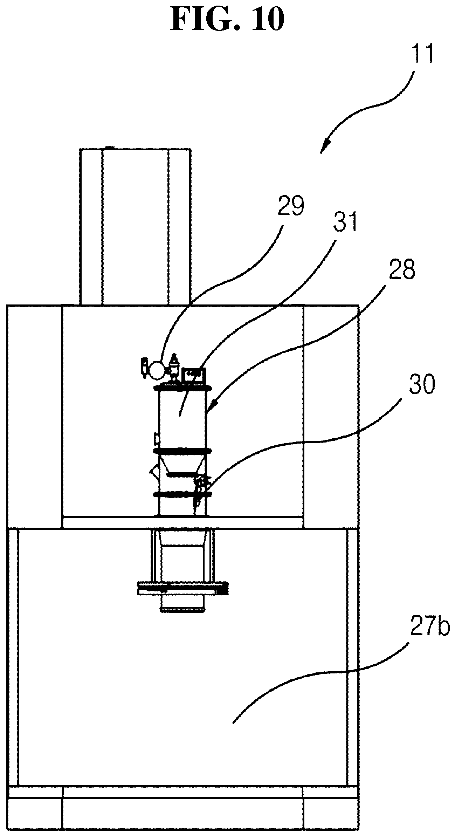

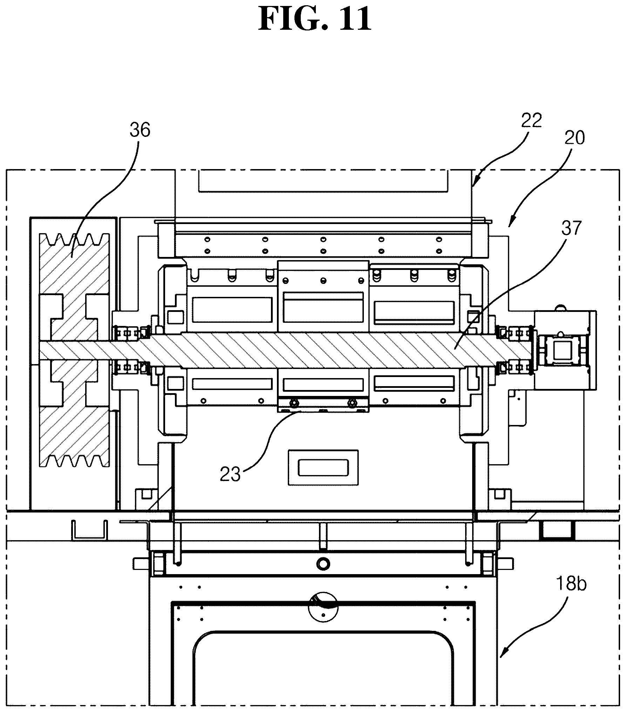

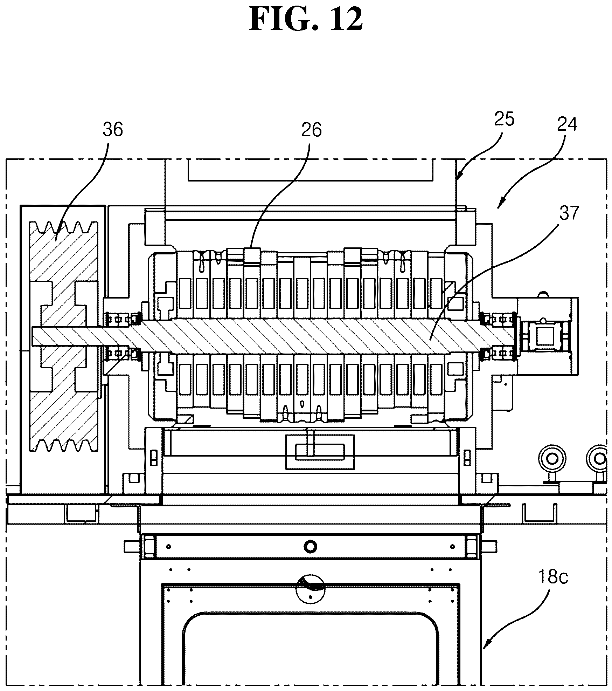

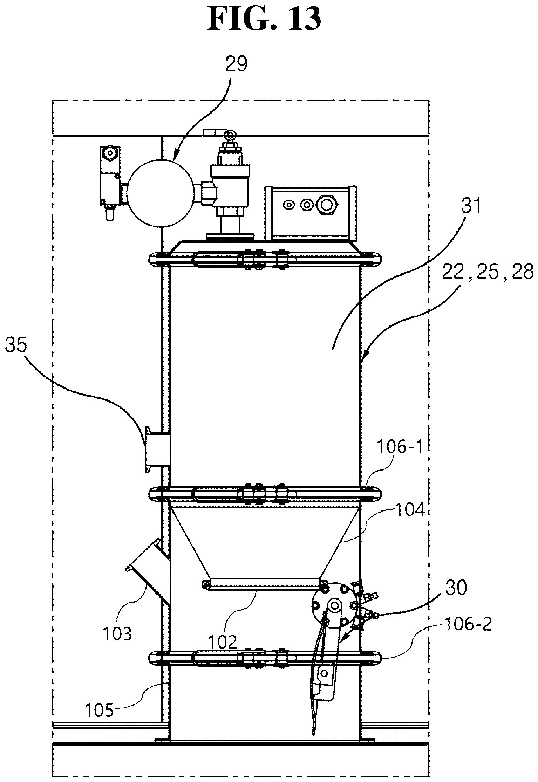

FIG. 7 is a perspective view illustrating a fine crusher of the scrap crushing and carrying apparatus according to an embodiment of the present invention, FIGS. 8 to 10 are front, plan, and side views, respectively, illustrating the fine crusher of the scrap crushing and carrying apparatus according to an embodiment of the present invention, and FIGS. 11 to 13 are enlarged views illustrating the fine crusher of the scrap crushing and carrying apparatus according to an embodiment of the present invention.

As illustrated in FIGS. 7 to 13, the fine crusher 11 according to the present invention is a device for finely crushing scrap particles that have been fed in a coarsely crushed state through two crushing processes. Specifically, the fine crusher 11 includes: a fine crushing feeding part 21 that stores scrap particles provided from the first carrying part 19 and feeds them into a second fine crushing part 20; a second carrying part 22 connected between the fine crushing feeding part 21 and the second fine crushing part 20 to carry and feed scrap particles in the fine crushing feeding part 21 to the second fine crushing part 20; the second fine crushing part 20 for crushing the scrap particles fed from the second carrying part 22 by using a second fine crushing cutter 23 which is arranged below the second carrying part 22 and rotates, a third carrying part 25 connected between a discharge hopper 18b of the second fine crushing part 20 and a third fine crushing part 24 to carry and feed the scrap particles in the discharge hopper 18b to the third fine crushing part 24; the third fine crushing part 24 for crushing the scrap particles fed from the third carrying part 25 by using a third fine crushing cutter 26, which is arranged below the third carrying part 25 and rotates; and a fourth carrying part 28 connected between the discharge hopper 18c of the third fine crushing part 24 and the packing part 27b to carry and feed the scrap particles in the discharge hopper 18c to the packing part 27.

The fine crushing feeding part 21 serves as a storage hopper for temporarily storing scrap particles packed in the packing part 27a of the coarse crusher 10, and then, feeding them to the second fine crushing part 20.

Here, the carrying method between the packing part 27a of the coarse crusher 10 and the fine crushing feeding part 21 of the fine crusher 11, i.e., the method of carrying the sack in which the scrap particles are contained, may adopt a method of directly carrying them by a worker or a method of carrying them using a conveyer.

The second carrying part 22 is connected between the fine crushing feeding part 21 and the second fine crushing part 20 to carry and feed the scrap particles in the fine crushing feeding part 21 to the second fine crushing part 20 using vacuum pressure or suction pressure, etc.

For this purpose, the second carrying part 22 is installed to communicate with the second fine crushing part 20 while being supported on the top of the second fine crushing part 20. The suction side of the second carrying part 22 is connected to the discharge side of the fine crushing feeding part 21 via a pipe 34, and the discharge side is connected to the upper inflow side of the second fine crushing part 20 located below.

The second carrying part 22 includes a pump unit 29, and the scrap particles can be sucked and carried by the suction force exerted by the pump unit 29.

Here, the pump unit 29 is installed to be supported on the top of the chamber 31, and the suction side of the pump unit 29 can communicate with the inside of the chamber 31, and a mesh screen, etc. can be provided between the suction side and the inside of the chamber 31 to prevent the scrap particles from being introduced into the pump.

Furthermore, the second carrying part 22 includes the chamber 31 capable of collecting a certain amount of scrap particles carried and introduced by suction.

A scrap particle inlet 35 is formed on the lateral side of the chamber 31, and the piping 34 extending from the fine crushing feeding part 21 can be connected to the scrap particle inlet 35.

Furthermore, the second carrying part 22 also includes a damper 30 capable of opening and closing, which can be installed on the discharge side of the bottom of the chamber 31.

In this case, it is desirable that the damper 30 is opened and closed using the operation of an actuator such as a cylinder.

Accordingly, when the pump unit 29 is operated in a state in which the damper 30 is closed, the scrap particles in the fine crushing feeding part 21 are carried along the pipe 34 by the suction force and collected inside the chamber 31 through the scrap particle inlet 35. The collected scrap particles can fall downward during the opening of the damper 30 and be fed to the second fine crushing part 20.

The second fine crushing part 20 is placed below the second carrying part 22 and crushes the scrap particles fed from the second carrying part 22 using the rotating second fine crushing cutter 23.

For this purpose, a shaft 37 of which one end has a pulley 36 receiving driving power from a motor (not shown) and of which both ends are supported by bearings 54 is installed inside the second fine crushing part 20. The plurality of second fine crushing cutters 23 are successively installed on the shaft 37 side by side along a shaft line in a coaxial structure.

Here, the rotating second fine crushing cutters 23 are installed inside the second fine crushing part 20, and can strongly hit and crush the scrap particles together with fixed cutters (not shown) which are arranged side by side with the rotating second fine crushing cutters at a predetermined interval in pairs.

In a preferred embodiment, the second fine crushing part 20 includes a cooling device that forms a circulation structure with a chiller (not shown), thereby effectively cooling heat generated when the scrap particles are crushed by the second fine crushing cutters 23.

Furthermore, the second fine crushing cutters 23 of the second fine crushing unit 20 are block-shaped cutters. The second fine crushing cutters 23 are relatively wider than third fine crushing cutters of the third fine crushing part 24 and are relatively small in number than the cutters of the third fine crushing part. Accordingly, the second fine crushing cutters 23 can crush the scrap particles to a larger size compared to the third fine crushing cutters 26. However, the second fine crushing cutters 23 can crush the scrap particles to a relatively smaller size than the first preliminary crushing cutter 17 of the first preliminary crushing part 15.

In other words, the second fine crushing cutters 23 of the second fine crushing unit 20 are block-shaped cutters, and the third fine crushing cutters 26 of the third fine crushing part 24 are formed in a knife shape. The third fine crushing cutters 26 of the third fine crushing part 24 can crush the scrap particles to a smaller size compared to the second fine crushing cutters 24 since being relatively narrower than second fine crushing cutters 23 of the second fine crushing part 20 and are more in number than the cutters 23 of the second fine crushing part.

Accordingly, when the scrap particles are introduced into the interior of the second fine crushing part 20 from the second carrying part 22 during the operation of the second fine crushing unit 20, the scrap particles pass between the rotating second fine crushing cutter 23 and the fixed cutter to crush the scrap particles finely, and then, drop down to the discharge hopper 18b located below.

The third carrying part 25 is connected between the discharge hopper 18b of the second fine crushing part 20 and the third fine crushing part 24 to carry and introduce the scrap particles to the third fine crushing part 24 using vacuum pressure or suction pressure.

For this purpose, the third carrying part 25 is installed in a structure that is supported on the top of the third fine crushing part 24 and communicates with it. The suction side of the third carrying part 25 is connected to the discharge hopper 18b of the second fine crushing part 20 and the discharge side is connected to an inlet side of the top of the third fine crushing part 24 located below.

The third carrying part 25 includes a pump unit 29, which is capable of sucking and carrying scrap particles by utilizing suction force exerted by the pump unit 29.

Here, the pump unit 29 is installed to be supported on the top of the chamber 31. In this instance, the suction side of the pump unit 29 is in communication with the interior of the chamber 31, and a mesh screen or the like is interposed between the suction side and the interior of the chamber 31 to prevent the scrap particles from being introduced into the pump side.

Furthermore, the third carrying part 25 includes a chamber 31 capable of collecting a certain amount of scrap particles carried by suction.

A scrap particle inlet 35 is formed on the side of the chamber 21, and a pipe 34 extending from the discharge hopper 18b of the second fine crushing part 20 may be connected to the scrap particle inlet 35.

Additionally, the third carrying part 25 further includes a damper 30 capable of opening and closing, which can be installed at the discharge side of the bottom of the chamber 31.

Here, it is preferable that the damper 30 is opened or closed by the operation of an actuator such as a cylinder.

Accordingly, when the pump unit 29 is operated in a state in which the damper 30 is closed, the scrap particles in the fine crushing feeding part 21 are carried along the pipe 34 by the suction force and collected inside the chamber 31 through the scrap particle inlet 35. The collected scrap particles can fall downward during the opening of the damper 30 and be fed to the third fine crushing part 24.

The third fine crushing part 24 is placed below the third carrying part 25 and crushes the scrap particles fed from the third carrying part 25 using the rotating third fine crushing cutter 26.

For this purpose, a shaft 37 of which one end has a pulley 36 receiving driving power from a motor (not shown) and of which both ends are supported by bearings is installed inside the third fine crushing part 24. The plurality of third fine crushing cutters 26 are successively installed on the shaft 37 side by side along a shaft line in a coaxial structure.

Here, the rotating third fine crushing cutters 26 are installed inside the third fine crushing part 24, and can strongly hit and crush the scrap particles together with fixed cutters (not shown) which are arranged side by side with the rotating third fine crushing cutters at a predetermined interval in pairs.

In a preferred embodiment, the third fine crushing part 24 includes a cooling device that forms a circulation structure with a chiller (not shown), thereby effectively cooling heat generated when the scrap particles are crushed by the third fine crushing cutters 26.

Furthermore, the third fine crushing cutters 26 of the third fine crushing unit 24 are knife-shaped cutters. The third fine crushing cutters 26 of the third fine crushing unit 24 are relatively narrower than the second fine crushing cutters 23 of the second fine crushing part 20 and are relatively more in number than the cutters of the second fine crushing part. Accordingly, the third fine crushing cutters 26 can crush the scrap particles to be finer than those crushed by the second cutters 23.

Accordingly, when the scrap particles are introduced into the interior of the third fine crushing part 24 from the third carrying part 25 during the operation of the third fine crushing unit 24, the scrap particles pass between the rotating third fine crushing cutter 26 and the fixed cutter to crush the scrap particles finely. The crushed scrap particles are sent to the fourth carrying part 28 after passing through the discharge hopper 18c located at the bottom of the third fine crushing part 24.

The fourth carrying part 28 serves to carrying the scrap particles, which finish the crushing process in the third fine crushing part 24, toward the packing part 27b by vacuum pressure or suction pressure.

For the purpose, the fourth carrying part 28 is installed at one side of the third fine crushing part 24. The suction side of the fourth carrying part 28 is connected to the discharge hopper 18c of the third fine crushing part 24, and the discharge side is arranged above and below a packing part 27b, such as a packing part 27b having a sack (not shown) for holding the scrap particles.

The fourth carrying part 28 includes a pump unit 29, which is capable of sucking and carrying scrap particles by utilizing suction force exerted by the pump unit 29.

Here, the pump unit 29 is installed to be supported on the top of the chamber 31. In this instance, the suction side of the pump unit 29 is in communication with the interior of the chamber 31, and a mesh screen or the like is interposed between the suction side and the interior of the chamber 31 to prevent the scrap particles from being introduced into the pump side.

Furthermore, the fourth carrying part 28 includes a chamber 31 capable of collecting a certain amount of scrap particles carried by suction.

A scrap particle inlet 35 is formed on the side of the chamber 21, and a pipe 34 extending from the discharge hopper 18c of the third fine crushing part 24 may be connected to the scrap particle inlet 35.

Additionally, the fourth carrying part 28 further includes a damper 30 capable of opening and closing, which can be installed at the discharge side of the bottom of the chamber 31.

Here, it is preferable that the damper 30 is opened or closed by the operation of an actuator such as a cylinder.

Accordingly, when the pump unit 29 is operated in a state in which the damper 30 is closed, the scrap particles in the discharge hopper 18c of the third fine crushing part 28 are carried along the pipe 34 by the suction force and collected inside the chamber 31 through the scrap particle inlet 35. The collected scrap particles can fall downward during the opening of the damper 30, and can be contained in a sack of the packing part 27b to be packed.

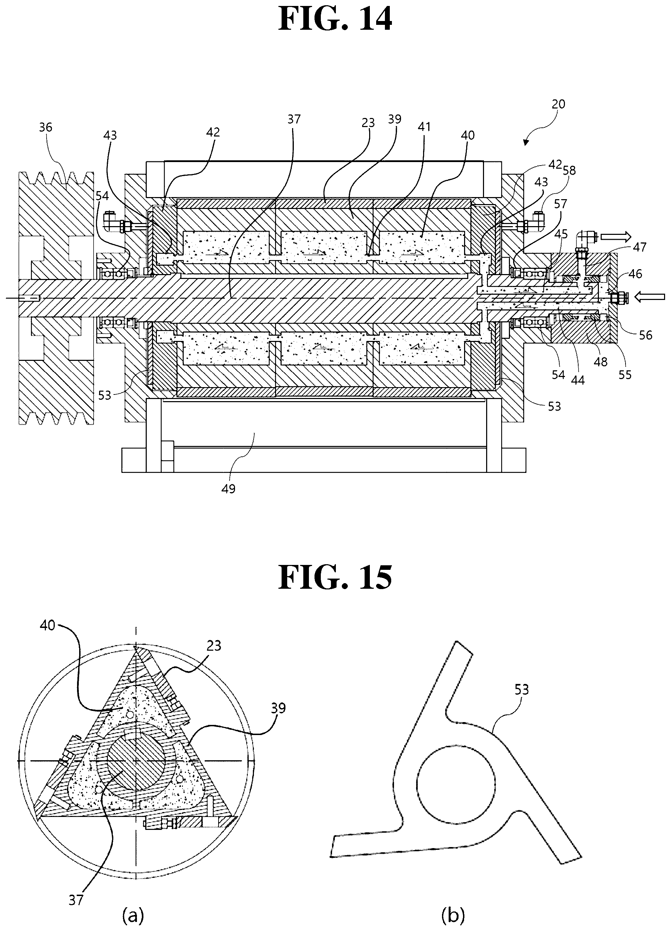

FIGS. 14 to 17 are sectional views illustrating cooling devices of a secondary fine crusher and a tertiary fine crusher in the fine crusher of the scrap crushing and carrying apparatus according to an embodiment of the present invention.

As illustrated in FIGS. 14 and 15, cooling water chambers 40 are means for supporting the second fine crushing cutters 23 of the second fine crushing part 20, and are respectively formed inside a plurality of cutter holders 39, which are combined in a coaxial structure on the shaft 37. The cooling water chambers 40 are connected to each other by a flow path 41 to communicate with each other. Cooling water direction changing chambers 43 which communicate with the cooling water chambers 40 are respectively formed inside the holder blocks 42 coupled on the shaft 37 while finishing the cutter holders 39 located at both edges.

Here, the cooling water chambers 40 and the cooling water direction changing chambers 43 are independently divided into two parts, so the cooling water chamber 40 and the cooling water direction changing chamber 43 of one side become a section through which cooling water is introduced and flows, and the cooling water chamber 40 and the cooling water direction changing chamber 43 of the other side become a section through which cooling water flows out.

Moreover, an inlet side cooling water path 44 which communicates with the cooling water chamber 40 of one side is formed at one end portion of the shaft 37, and an outlet side cooling water path 45 which communicates with the cooling water chamber 40 of the other side is formed.

That is, the shaft 37 has an inlet 46 and an outlet 47, which communicate with a cooling water supply source (not shown), such as a chiller, formed at the end portion of one side, and an adapter block 48 communicating with the inlet side cooling water path 44 and the outlet side cooling water path 45 of the shaft 37 is installed.

Accordingly, the cooling water supplied from the cooling water supply source flows along a circulation route of inlet 46 ---+ inlet side cooling water path 44 → cooling water direction changing chamber 43 of one side ---+ cooling water chamber 40 of one side → cooling water direction changing chamber 43 → cooling water chamber 40 of the other side → the cooling water direction changing chamber 43 of the other side → outlet side cooling water path 45 → outlet 47 → cooling water supply source, so as to cool the whole of the holder block 42 including the second fine crushing cutters 23. In this instance, a seal 55 and a seal fixing portion 56 are provided at the end of the shaft 37 to prevent leakage of cooling water.

Furthermore, the holder blocks 42 are provided on both ends of the cutter holder 39, and blades 53 combined with the shaft 37 to be rotated are respectively arranged on the end portions of the holder blocks 42. In this case, the blades 53 serve to block dust generated by the crushing operation of the second fine crushing cutters 23 from flowing towards the bearing 54. More specifically, the second fine crushing part 20 includes an air inlet 58 so that compressed air supplied by an air compressor (not shown) can flow thereinto. The compressed air introduced through the air inlet 58 flows in the opposite direction to the bearing 54, namely, toward the central portion of the cutter holder 39, by rotation of the blades 53. In other words, dust scatters through a gap between the housing 49 and the cutter holder 39 is prevented from being carried toward the bearing 54 by the compressed air supplied through the air inlet 58 and the blades 53. In addition, a retainer 54 is provided at an end portion of the bearing to secondarily block dust from being carried toward the bearing 54.

Here, in a case in which there are no blades 53, dust generated during the crushing process is adhered on the shaft 37 and the bearing 54 through the gap. Therefore, the blades 53 are respectively disposed at both ends of the second fine crushing part 20 to block the dust scattered through the gap from moving toward the bearing 54, thereby preventing dust from being adhered on the shaft 37 and the bearing 54 and preventing generation of friction heat by the rotation. For instance, referring to FIG. 14, the blade 53 disposed at the right side of the holder block 42 carries the compressed air supplied through the air inlet 58 to the left side so as to prevent the dust generated during the crushing work by the second fine crushing cutters 23 from moving to the right side. Moreover, the retainer 57 is provided on the left side of the bearing 54 to further prevent the dust from moving toward the bearing 54. Furthermore, the second fine crushing part 20 can be cooled by the flow of the compressed air. Here, the supplied compressed air passes the outer circumferential surface of the holder block 42 and is discharged to the outside of the housing 49, thereby preventing an increase of internal pressure.

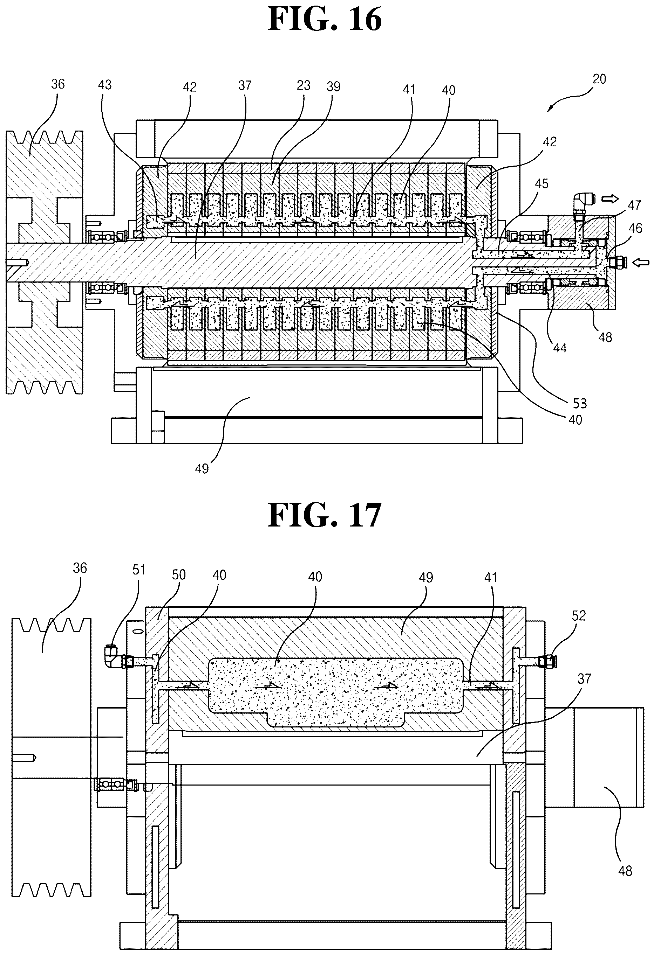

As illustrated in FIG. 16, a plurality of cooling water chambers 40 which are combined with the shaft 37 in a coaxial structure are formed inside each cutter holders 39 as means for supporting the third fine crushing cutters 26 of the third fine crushing part 24. Each of the cooling water chambers 40 connected by a flow path 41 to communicate with each other. Additionally, the cooling water chambers 40 are connected to each other by a flow path 41 to communicate with each other. Cooling water direction changing chambers 43 which communicate with the cooling water chambers 40 are respectively formed inside the holder blocks 42 coupled on the shaft 37 while finishing the cutter holders 39 located at both edges.

Here, the cooling water chambers 40 and the cooling water direction changing chambers 43 are independently divided into two parts, so the cooling water chamber 40 and the cooling water direction changing chamber 43 of one side become a section through which cooling water is introduced and flows, and the cooling water chamber 40 and the cooling water direction changing chamber 43 of the other side become a section through which cooling water flows out.

Moreover, an inlet side cooling water path 44 which communicates with the cooling water chamber 40 of one side is formed at one end portion of the shaft 37, and an outlet side cooling water path 45 which communicates with the cooling water chamber 40 of the other side is formed.

That is, the shaft 37 has an inlet 46 and an outlet 47, which communicate with a cooling water supply source (not shown), such as a chiller, formed at the end portion of one side, and an adapter block 48 communicating with the inlet side cooling water path 44 and the outlet side cooling water path 45 of the shaft 37 is installed.

Accordingly, the cooling water supplied from the cooling water supply source flows along a circulation route of inlet 46 ---+ inlet side cooling water path 44 → cooling water direction changing chamber 43 of one side ---+ cooling water chamber 40 of one side → cooling water direction changing chamber 43 → cooling water chamber 40 of the other side → the cooling water direction changing chamber 43 of the other side → outlet side cooling water path 45 → outlet 47 → cooling water supply source, so as to cool the whole of the holder block 42 including the second fine crushing cutters 23.

As illustrated in Fig. 17, a cooling structure with respect to the housings 49 of the second fine crushing part 20 and the third fine crushing part 24 24 is disclosed herein.

The cooling water chamber 40 is formed inside the housing 49, and the cooling water chambers 40 are respectively formed also on housing frames 50 of both sides for supporting the housing 49. The cooling water chambers 40 are connected by the flow path 41.

In addition, the chamber 40 of the housing frame 50 of one side is connected to an inlet nipple 51 for inflow of cooling water, and the chamber 40 of the housing frame 50 of the other side is connected to an outlet nipple 52 for discharge of the cooling water. In this instance, the inlet nipple 51 and the outlet nipple 52 form a circulation line with the cooling water supply source.

Accordingly, the cooling water provided from the cooling water supply source can cool the whole of the housing 49 while flowing along the circulation route of inlet nipple 51 → chamber 40 of housing frame 50 of one side → chamber 40 of housing 49 → chamber 40 of housing frame 50 of the other side → outlet nipple 52 → cooling water supply source.

Now, the operational state of the scrap crushing and carrying apparatus having the above configuration will be described as follows.

First, the scraps of rubber materials remaining after making shoe insoles or the like are caught on the hangers 12 in the preliminary crushing feeding part 14 of the coarse crusher 10. Such scraps are crushed into relatively rough particles and packed while passing through the route of preliminary crushing hopper part 16 → first preliminary crushing part 15 → first carrying part 19 → packing part 27a.

Continuously, the scrap particles primarily crushed in the coarse crusher 10 are crushed into fine scrap particles and packed while passing through the route of fine crushing feeding part 21 of the fine crusher 11 → second carrying part 22 → second fine crushing part 20 → third carrying part 25 → third fine crushing part 24 → fourth carrying part 28 → packing part 27b.

In this way, the finely crushed scrap particles through the preliminary crushing and fine crushing processes can be provided for the purpose of various applications to be recycled.

Meanwhile, in a desirable embodiment, the present invention provides a layout in which the coarse crusher 10 and the fine crusher 11 are linked and constructed in an integrated unit form to realize a successively automated line of the preliminary crushing process by the coarse crusher 10 and the fine crushing process by the fine crusher 11.

For this purpose, the coarse crusher 10 and the fine crusher 11 are arranged in series or parallel on a process line, and the discharge hopper 15a in the first preliminary crushing part 15 of the coarse crusher 10 and the second carrying part 22 of the fine crusher 11 are connected to each other via the pipe 34.

Of course, the first carrying part 19 of the coarse crusher 10 and the fine crushing feeding part 21 of the fine crusher 11 may be omitted.

Accordingly, the layout having the successively automated line in which scrap particles are roughly crushed in the first stage by the coarse crusher 10 and the scrap particles directly sent to the fine crusher 11 are finely crushed in the second stage can be constructed.

Since the layout having the successively automated line in which the coarse crusher 10 for the preliminary crushing process and the fine crusher 11 for the fine crushing process are linked to each other is constructed, the present invention can maximize efficiency in the entire process and efficiency in facility operation, and is advantageous in terms of factory layout design.

As a result, the scrap crushing and carrying apparatus of the present invention can allow the scrap particles to be recycled by crushing and carrying scraps of rubber materials remaining after making shoe insoles and rubber materials such as waste shoes so that they can be recycled, and prevent a damage to the crushing device or carrying apparatus by the accumulated dust by collecting dust generated during the crushing process.

That is, the present invention provides a new type scrap crushing and carrying apparatus, which crushes scraps through the preliminary crushing process for roughly crushing the scraps and the fine crushing process for finely crushing the particles, and a carrier for forcedly carrying the crushed particles, so as to completely solve the environmental pollution problem, prevent failure by dust, and provide economic benefits through resource recycling.

The technical configuration of the present invention as described above can be understood by those skilled in the art to be implemented in other specific forms without changing the technical concept or essential features of the present invention.

Therefore, the exemplary embodiments described above are illustrative in all aspects and should be understood as not limiting, and the scope of the present invention is defined by the appended claims, and all modifications or variations derived from the meaning and scope of the claims or equivalent concepts should be interpreted as being included in the scope of the present invention.

### [Sequence List]

100: Carrier 101: Filter unit
102: Outlet 103: Vent hole
103-1: Vent filter
104: Housing 105: Communication portion
106-1: Connection portion 106-2: Connection portion
10: Coarse crusher 11: Fine crusher
12: Hanger 13: Table
14: Preliminary crushing feeding part 15: First preliminary crushing part
16: Preliminary crushing hopper part 17: First preliminary crushing cutter
18a, 18b, 18c: Discharge hopper 19: First carrying part
20: Second fine crushing part 21: Fine crushing feeding part
22: Second carrying part 23: Second fine crushing cutter
24: Third fine crushing part 25: Third carrying part
26: Third fine crushing cutter 27a,27b: Packing part
28: Fourth carrying part 29: Pump unit
30: Damper 31: Chamber
32: Hinge device 33: Toggle clamp
34: Pipe 35: Scrap particle inlet
36: Pulley 37: Shaft
38: Driving part 39: Cutter holder
40: Cooling water chamber 41: flow path
42: Holder block 43: Cooling water direction changing chamber
44: Inlet cooling water path 45: Outlet cooling water path
46: Inlet 47: Outlet
48: Adapter block 49: Housing
50: Housing frame 51: Inlet nipple
52: Outlet nipple 53: Blade
54: Bearing 55: Seal
56: Sealing fixing portion 57: Retainer
58: Air inlet

## Claims

1. A scrap crushing and carrying apparatus, comprising:
a coarse crusher for crushing scraps;
a fine crusher for further crushing the scraps crushed by the coarse crusher; and
a carrier for storing the scraps or carrying the scraps to the coarse crusher or the fine crusher,
wherein the carrier includes a filter unit provided inside the carrier to collect dust in the carrier.

2. The scrap crushing and carrying apparatus according to claim 1, wherein the carrier comprises:
a chamber that forms a space where the scraps can be stored;
a pump unit provided on one side of the chamber to vary the pressure inside the chamber; and
an inlet that communicates with the chamber to allow the scraps to be carried into the chamber,
wherein the scraps are sucked into the chamber through the inlet since negative pressure is formed inside the chamber by the pump unit.

3. The scrap crushing and carrying apparatus according to claim 2, wherein the carrier further includes:
an outlet that communicates with the chamber and allows the carried scraps inside the chamber to be discharged to the outside; and
a damper that opens or closes the outlet,
wherein the outlet is closed by the damper when the scraps are sucked, and is opened by the damper when the scraps are discharged.

4. The scrap crushing and carrying apparatus according to claim 3, wherein the pump unit sprays air to clean the filter unit in a state in which the outlet is opened by the damper when the scraps are discharged.

5. The scrap crushing and carrying apparatus according to claim 4, wherein the carrier further comprises:
a vent hole for allowing at least some of the air sprayed from the pump unit to flow to the outside when the scraps are discharged,
wherein the vent hole includes a vent filter for filtering the air flowing to the outside.
